**Europäisches Patentamt**

**European Patent Office**

**Office européen des brevets**

(19)

(11) Numéro de publication: **0 108 027**
**A1**

# (12) DEMANDE DE BREVET EUROPEEN

(21) Numéro de dépôt: **83450028.2**

(22) Date de dépôt: **20.10.83**

(51) Int. Cl.³: **C 03 C 15/02**

(30) Priorité: **20.10.82 FR 8217664**

(43) Date de publication de la demande:
**09.05.84 Bulletin 84/19**

(84) Etats contractants désignés:
**BE DE GB IT SE**

(71) Demandeur: **CRISTALLERIES ET VERRERIES DE VIANNE Société Anonyme**
**24, rue de la Saussière**
**F-92100 Boulogne(FR)**

(72) Inventeur: **Longeron, Alain**
**Coupard**
**F-47320 Lavardac(FR)**

(74) Mandataire: **Thébault, Jean-Louis**
**Cabinet Jean-Louis Thébault 50, Cours de Verdun**
**F-33000 Bordeaux(FR)**

(54) Procédé et installation d'apprêtement de verreries.

(57) L'invention concerne une installation et un procédé d'apprêtement de verreries, notamment de luminaires, ou analogue, en verre de tailles et formes pouvant être variables et complexes, caractérisé en ce qu'il consiste à effectuer successivement, dans l'ordre et sans interruption, les opérations suivantes :

- prélavage des pièces à l'aide d'acide fluorhydrique à température ambiante;
- égouttage;
- lavage à l'aide d'une solution alcaline chaude pendant un temps déterminé suivant la nature et la température de la solution;
- égouttage;
- pré-rinçage à l'eau;
- pré-rinçage à température ambiante à l'aide d'une solution aqueuse d'acide acétique;
- égouttage;
- rinçage à l'eau chaude;
- rinçage à l'eau adoucie chaude;
- rinçage à l'eau déminéralisée chaude;
- séchage à l'air chaud.

Application notamment à l'apprêtement de luminaires.

FIG.1a

- 1 -

## PROCÉDÉ ET INSTALLATION D'APPRÊTEMENT DE VERRERIES

La présente invention a trait à un procédé d'apprêtement de verreries, c'est-à-dire de nettoyage intérieur et extérieur de pièces en verre, en particulier de luminaires de tailles et formes variables et complexes, afin de les rendre exemptes de toutes souillures et d'obtenir un état de surface homogène de la matière.

Habituellement, les traitements d'apprêtement, notamment des luminaires, sont réalisés manuellement dans des conditions qui sont loin d'être parfaites et entraînent un nombre non négligeable de mises au rebut ou de retours des pièces ainsi traitées par suite de souillures qui ont échappé aux traitements d'apprêtement, voire même qui ont contaminé des pièces au cours de ces traitements. En effet, ces traitements s'opèrent de manière quasi artisanale avec un certain nombre de manipulations dans des conditions de rigueur de propreté des divers fluides au contact desquels sont soumises les pièces, notamment les liquides de rinçage, quelquefois douteuses.

De plus, ces traitements mobilisent une main d'oeuvre importante du fait du nombre de manipulations diverses éparpillées dans l'espace et prennent beaucoup de temps.

Enfin, ces traitements, en règle générale, ne sont pas suffisamment efficaces, non seulement au niveau de la qualité de propreté, mais aussi à celui du fini et de l'aspect des pièces après traitement.

Le but de l'invention est de pallier ces divers inconvénients en proposant des moyens pour réaliser de manière automatique, rapide et particulièrement efficace de tels traitements d'apprêtements de verreries.

A cet effet, l'invention a pour objet un procédé d'apprêtement de verreries, notamment de luminaires, ou analogues, en verre de tailles et formes pouvant être variables et complexes, caractérisé en ce qu'il consiste à effectuer successivement, dans l'ordre et sans interruption, les opérations suivantes :

- prélavage des pièces à l'aide d'acide fluorhydrique à température ambiante ;
- égouttage ;
- lavage à l'aide d'une solution alcaline chaude pendant un temps déterminé suivant la nature et la température de la solution ;
- égouttage ;
- pré-rinçage à l'eau ;
- pré-rinçage à température ambiante à l'aide d'une solution aqueuse d'acide acétique ;
- égouttage ;
- rinçage à l'eau chaude ;
- rinçage à l'eau adoucie chaude ;
- rinçage à l'eau déminéralisée chaude ;
- séchage à l'air chaud.

Un tel procédé permet d'obtenir des pièces d'une propreté absolument parfaite, exempte de toute souillure et d'un aspect, en particulier un éclat, un brillant, une netteté, remarquables.

L'invention concerne également une installation pour la mise en oeuvre de ce procédé et que l'on va maintenant décrire en détails en se reportant aux dessins annexés sur lesquels :

- Fig. 1a et 1b illustrent, mises bout à bout, le schéma général d'une installation pour la mise en oeuvre du procédé selon l'invention ;
- Fig. 2 représente une vue détaillée en coupe verticale axiale de la partie amont de l'installation de la Fig. 1;
- Fig. 3 représente une vue en coupe verticale transversale suivant la ligne III-III du dispositif de la Fig. 2, et
- Fig. 4 représente une demi-vue en coupe verticale transversale suivant la ligne IV-IV du dispositif de la Fig. 2.

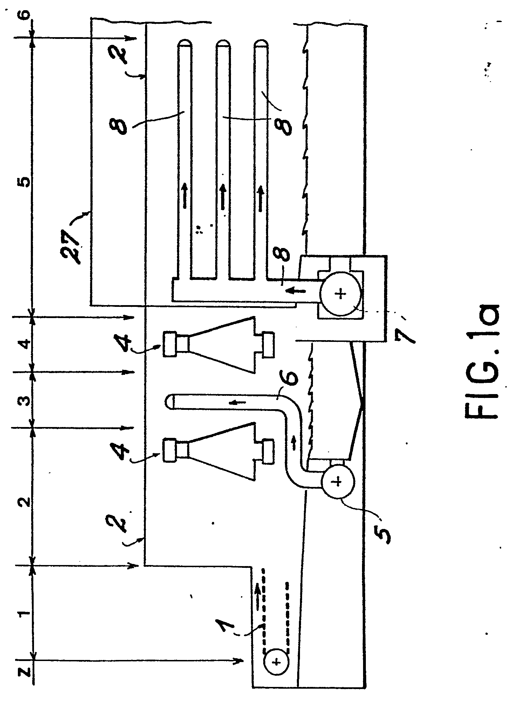

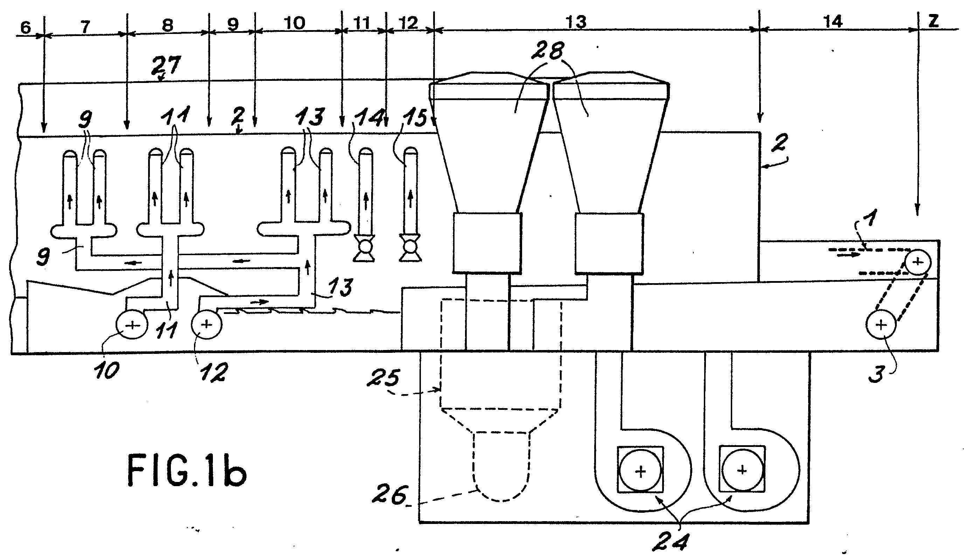

Les Fig. 1a et 1b représentent une vue schématique en élévation latérale d'une installation d'apprêtement de luminaires mettant en oeuvre le procédé de l'invention.

Cette installation comprend un tapis de convoyage 1 horizontal chargé de transporter en continu les pièces à traiter depuis un poste de chargement (zone Z1) jusqu'à un poste de déchargement (zone Z14) apèrs avoir traversé un tunnel continu 2 à l'intérieur duquel vont se dérouler toutes les phases du procédé d'apprêtement selon l'invention.

Le tapis, 1 a une structure maillée pour permettre la traversée des différents fluides et est réalisé en un matériau résistant aux divers agents de traitement des pièces véhiculées par le tapis.

L'entraînement du tapis 1 est classique, par un moto-variateur électrique 3 entraînant l'un des rouleaux d'extrémité (Fig. 1b), le sens d'avancement étant indiqué par les flèches.

A l'intérieur du tunnel 2 s'effectuent successivement les différentes opérations de traitement, les zones successives de traitement étant repérées schématiquement par un numéro de zone depuis Z2 jusqu'à Z13 et que l'on va détailler maintenant.

La zone Z2 est une zone de temps mort équipée d'un rideau d'air 4 pour isoler le poste de chargement Z1 du premier poste de traitement Z3. Dans la zone Z3, en effet, on effectue un prélavage des pièces à l'aide d'une solution aqueuse d'acide fluorhydrique à température ambiante.

La solution est amenée sous pression et pulvérisée par un système de pompe 5 et de canalisations 6.

Cette zone est immédiatement suivie d'une zone Z4 équipée d'un rideau d'air 4 isolant Z3 de la zone Z5 où s'effectue un lavage à l'aide d'une solution alcaline chaude amenée et pulvérisée par un système de pompe 7 et de canalisations appropriées 8.

La zone Z5 est suivie d'une zone d'égouttage Z6. Après cette zone, est prévue une zone Z7 (Fig. 1b) de pré-rinçage à l'eau ordinaire (eau de la ville ou du robinet) amenée et pulvérisée sous pression par un réseau de canalisations 9. Z7 est suivie d'une zone Z8 de pré-rinçage à l'aide d'une solution d'acide acétique amenée sous pression et pulvérisée par un système de pompe 10 et de canalisations 11.

La zone suivante Z9 est une zone d'égouttage des pièces avant leur rinçage dans la zone Z10 par de l'eau ordinaire chaude amenée sous pression et pulvérisée à l'aide d'un système de pompe 12 et de canalisations 13, ce réseau fournissant par récupération l'eau nécessaire pour les canalisations 9 de la zone Z7.

Dans la zone suivante Z11 s'opère un rinçage à l'aide d'eau adoucie chaude pulvérisée sous pression par un réseau de canalisations 14.

Enfin, un dernier rinçage est effectué dans la zone Z12 à l'aide d'eau déminéralisée chaude pulvérisée sous pression par un jeu de canalisations 15.

La zone suivante Z13 est une zone de séchage à l'air chaud des pièces, celles-ci sortant ensuite du tunnel 2 pour être évacuées au poste de déchargement Z14.

On va maintenant reprendre en détail chacune des zones de traitement en se référant notamment aux figures détaillées 2 à 4.

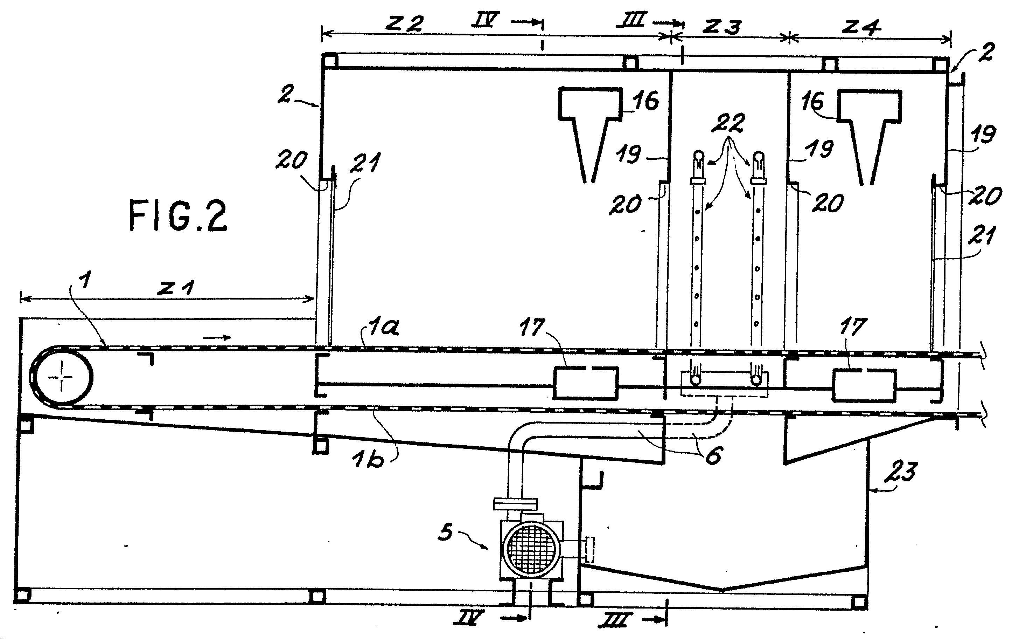

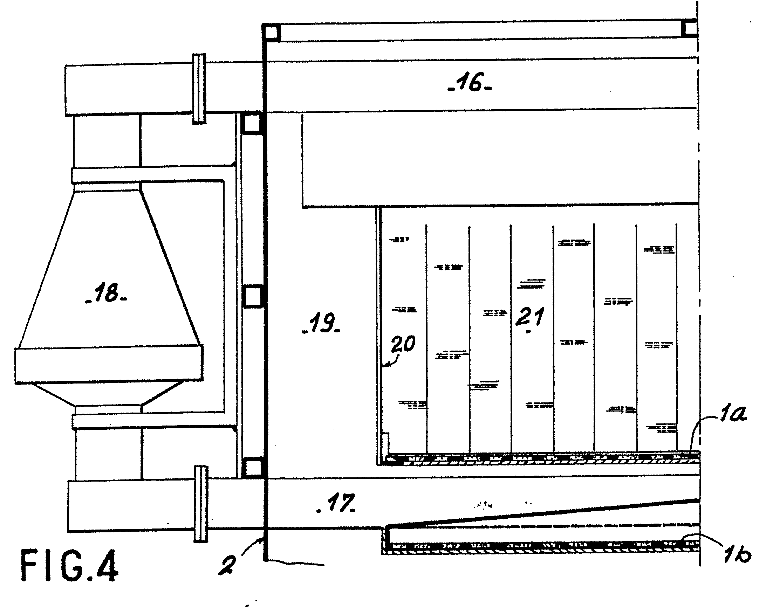

Les rideaux d'air 4 des zones Z2 et Z4 sont obtenus à l'aide d'une boîte supérieure horizontale de soufflage 16 (Fig. 2 et 4) disposée transversalement à l'intérieur du tunnel 2 à sa partie supérieure et dirigée vers une boîte inférieure horizontale d'aspiration 17 disposée entre les deux brins 1a et 1b du tapis de convoyage 1.

Les boîtes supérieure et inférieure 16 et 17 sont reliées sur un côté du tunnel 2 et extérieurement à celui-ci, à une soufflante symbolisée en 18.

Le tunnel 2 est compartimenté intérieurement en autant de compartiments que de zones à l'aide de cloisons intérieures 19 (Fig. 2) laissant un orifice de passage central 20 de section suffisante pour laisser passer le tapis 1 avec des pièces de grandes dimensions. Un tel orifice de passage 20 existe également à l'entrée et à la sortie du tunnel 2, ces orifices étant munis d'un rideau à lames verticales souples 21. Des rideaux tels que 21 peuvent également être interposés entre certaines zones du tunnel comme par exemple les zones Z4 et Z5 (Fig. 2).

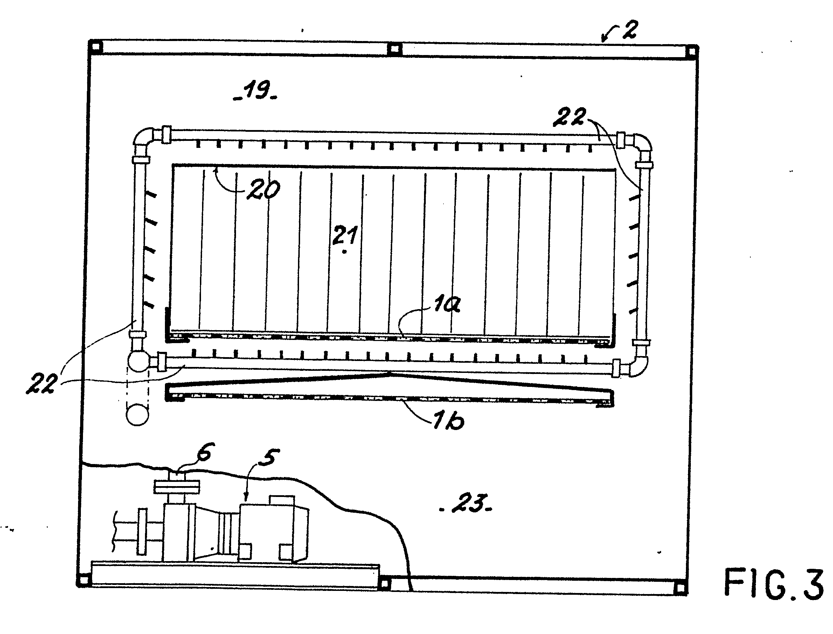

La Fig. 3 illustre un mode de réalisation du réseau 6 d'aspersion des pièces à l'aide de la solution d'acide fluorhydrique.

Ce réseau 6 est constitué d'une double rampe en boucle fermée rectangulaire 22 entourant complètement le brin supérieur 1a du tapis et les pièces supportées par ce dernier. Les pièces sont donc aspergées par tous les côtés et leurs faces aussi bien intérieures qu'extérieures peuvent ainsi être parfaitement traitées.

En dessous des rampes 22 est disposé un bac 23 de récupération de la solution de traitement en vue de son recyclage par la moto-pompe 5.

La solution de traitement dans la zone Z3 est une solution diluée de 0,5 à 3% en poids d'acide fluorhydrique. Le temps de contact verre/acide est au maximum (pour des luminaires) de 30 secondes environ, le temps d'égouttage n'étant pas compris, celui-ci s'effectuant au cours du transfert vers la zone Z5 et ne devant pas excéder 60 secondes environ.

Le but de ce traitement acide est d'homogénéiser la surface du verre par décapage des zones malsaines et de préparer la surface aux actions des opérations ultérieures.

Les réseaux (8,9,11,13,14 et 15) d'aspersion des pièces à l'aide des différents liquides concernés ont une structure et un agencement du même ordre que le réseau 6-22 et n'ont pas besoin d'être décrits plus en détail, de tels systèmes étant par ailleurs parfaitement classiques.

Le traitement alcalin en Z5 exerce une action physico-chimique et a pour but de détruire et d'éliminer toutes traces des masques alcalino-solubles utilisés en décoration sur certaines pièces. De plus, pour les pièces sans masques, ce traitement produit une action de lessivage. Pour ce faire on peut utiliser une solution de soude caustique (de 10 à 15% en poids par exemple) ou n'importe quel substitut procurant les mêmes résultats.

La solution alcaline est utilisée de préférence à une température de l'ordre de 65°C environ. Le temps de contact des pièces avec une telle solution est, hors égouttage, de l'ordre de 120 secondes.

L'égouttage s'effectue dans la zone Z6 et sa durée n'est pas critique en ce sens qu'elle n'influe en rien sur l'état final des pièces.

Le pré-rinçage à l'eau dite ordinaire (sans traitement spécial) effectué en Z7 a pour but d'enlever le maximum de résidus des traitements précédents restés au contact du verre.

Ce pré-rinçage est effectué avantageusement avec les eaux récupérées dans la zone Z10, après ce pré-rinçage les eaux étant rejetées. La température de ces eaux est celle des bains dont elles proviennent. A la sortie de ce pré-rinçage et de l'égouttage qui suit (au cours du transfert de Z7 à Z8) les pièces sont normalement débarassées de toutes traces de solution alcaline.

Le pré-rinçage à l'acide acétique opéré en Z8 facilite et rend plus efficace l'action de rinçage suivant en neutralisant les ultimes traces de soude qui pourraient subsister. Ce traitement confère également aux pièces une qualité de surface (brillant, netteté) remarquable. Pour ce faire, il est utilisé une solution d'acide acétique à 1% en poids environ , à température ambiante, cette solution étant recyclée. Le temps de contact nécessaire est de l'ordre de 30 secondes.

En Z10 s'opère un rinçage à l'eau ordinaire destiné à supprimer toute impureté autre que celle contenue dans l'eau par son action mécanique et l'importance des débits utilisés. L'eau utilisée à cet effet est maintenue à 65°C environ et est recyclée. Avantageusement, le réseau d'aspersion 13 recycle les eaux récupérées des deux autres dispositifs de rinçage 14, 15 et alimente,comme représenté sur la Fig. 1, le réseau 9 de Z7. De l'eau neuve est éventuellement introduite dans le circuit 13.

Les deux derniers rinçages, à eau adoucie à 65°C environ en Z11 et à eau déminéralisée à 65°C environ en Z12 ont pour but d'éliminer progressivement toute trace d'impureté dissoute dans l'eau du rinçage précédent afin qu'après séchage la surface des pièces soit vierge.

Le séchage en Z13 a pour but d'éliminer toutes traces d'eau à la surface des pièces. Il est effectué par exemple à l'aide de deux ventilateurs 24 aspirant de l'air neuf préalablement chauffé et l'envoyant dans le compartiment de la zone Z13 du tunnel 2.

L'air embué est repris à travers un échangeur thermique (économiseur d'énergie) symbolisé en 25 et rejeté à l'extérieur par une conduite 26. En outre, l'installation est munie d'un système d'aspiration des buées constitué de conduites 27 disposées à la partie supérieure du tunnel 2 et communiquant avec les compartiments des zones Z5 à Z12.

Les conduites 27 sont reliées à deux ventilateurs d'extraction symbolisés en 28 disposés sur le côté du tunnel 2 et renvoyant les buées dans la conduite de rejet 26 après passage dans l'échangeur 25. Ce dernier récupère des calories à l'évacuation des buées et les restitue au séchage.

Les pièces à traiter sont posées individuellement côte à côte à la main sur le tapis 1 en Z1 ou bien sur des supports spéciaux pour les pièces à stabilité précaire.

L'avancement à vitesse constante du tapis 1 et le déroulement des différentes phases du traitement conforme à l'invention s'effectuent automatiquement en fonction d'un programme séquentiel de mise en route dans lequel sont définis et contrôlés en permanence les paramètres des diverses zones de traitement (pression, débit, température, durée, acidité des bains, etc...) ces paramètres pouvant bien entendu varier suivant la nature des pièces à traiter.

Enfin, l'invention n'est évidemment limitée au mode de réalisation représenté et décrit ci-dessus mais en couvre au contraire toutes les variantes notamment en ce qui concerne la nature des agents de traitement dans la mesure où ils procurent les mêmes effets et les moyens pour leur mise en oeuvre.

R E V E N D I C A T I O N S
:=:=:=:=:=:=:=:=:=:=:=:=:=:

1. Procédé d'apprêtement de verreries, notamment de luminaires, ou analogue, en verre de tailles et formes pouvant êtres variables et complexes, caractérisé en ce qu'il consiste à effectuer successivement, dans l'ordre et sans interruption les opérations suivantes :

- prélavage des pièces à l'aide d'acide fluorhydrique à température ambiante ;
- égouttage :
- lavage à l'aide d'une solution alcaline chaude pendant un temps déterminé suivant la nature et la température de la solution ;
- égouttage ;
- pré-rinçage à l'eau ;
- pré-rinçage à température ambiante à l'aide d'une solution aqueuse d'acide acétique ;
- égouttage ;
- rinçage à l'eau chaude ;
- rinçage à l'eau adoucie chaude ;
- rinçage à l'eau déminéralisée chaude ;
- séchage à l'air chaud.

2. Procédé suivant la revendication 1, caractérisé en ce que l'acide fluorhydrique est utilisé en solution aqueuse contenant de 0,5 à 3% en poids environ d'acide, le temps de contact, hors égouttage, des pièces avec la solution étant de l'ordre de 30 secondes environ, l'égouttage consécutif s'effectuant pendant une durée maximale de 60 secondes environ.

3. Procédé suivant la revendication 1 ou 2, caractérisé en ce que la solution alcaline est une solution de soude caustique, ou son substitut, à une dilution de 10 à 15% en poids et dont la température est maintenue à environ 65°C, le temps de contact, hors égouttage, des pièces avec la solution étant de l'ordre de 120 secondes.

4. Procédé suivant l'une des revendications 1 à 3, caractérisé en ce que la solution d'acide acétique présente une concentration en acide de 1% environ en poids, le temps de contact, hors égouttage, des pièces avec la solution étant de l'ordre de 30 secondes environ au maximum.

5. Procédé suivant l'une des revendications 1 à 4, caractérisé en ce que les eaux de rinçage (eau ordinaire, eau adoucie et eau déminéralisée) sont maintenues à une température de 65°C environ.

6. Installation d'apprêtement de verreries pour la mise en oeuvre du procédé selon l'une des revendications 1 à 5, caractérisée en ce qu'elle comporte un tapis (1) de convoyage des pièces à traiter, disposé à l'horizontale et traversant un tunnel (2) cloisonné en autant de compartiments que de zones différentes (Z2 à Z13) de traitement.

7. Installation suivant la revendication 6, caractérisée en ce que chaque cloisonnement intérieur vertical (19) du tunnel (2) délimite un orifice (20) de passage traversé par le brin supérieur 1a du tapis (1) avec sa charge, des rideaux de séparation à lames verticales souples (21) ou analogue étant disposés au droit de certains des orifices.

8. Installation suivant la revendication 6 ou 7, caractérisée en ce qu'un dispositif à rideau d'air vertical (4) est prévu immédiatement en amont et en aval du compartiment (Z3) de prélavage à l'acide fluorhydrique.

9. Installation suivant l'une des revendications 6 à 8, caractérisée en ce que l'eau de pré-rinçage suivant le lavage alcalin provient de la récupération des eaux des rinçages ultérieurs.

10. Installation suivant l'une des revendications 6 à 9, caractérisée en ce qu'elle comporte des conduits (27) de récupération des buées communiquant avec certains des compartiments du tunnel (2) et reliés à un dispositif extracteur (28) de rejet à travers un échangeur thermique (économiseur d'énergie (25) également traversé par les buées provenant du compartiment (Z13) de séchage par air chaud.

FIG.1a

FIG.1b

2,5

FIG.2

0108027

4,5

FIG.3

FIG.4

Office européen
des brevets

**RAPPORT DE RECHERCHE EUROPEENNE**

Numéro de la demande

EP 83 45 0028

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | GB-A-2 055 792 (PILKINGTON BROTHERS) | | C 03 C 15/02 |
| A | US-A-2 166 428 (D.I. DUBOIS) | | |
| A | BE-A- 622 536 (VEREINIGUNG VOLKSEIGENER BETRIEBE GLAS DRESDEN) | | |
| A | DE-A-1 621 639 (PHILIPS' PATENTVERWALTUNG GmbH) | | |

--- 

**DOMAINES TECHNIQUES RECHERCHES (Int. Cl. ³)**

C 03 C 15/00

Le présent rapport de recherche a été établi pour toutes les revendications

| Lieu de la recherche LA HAYE | Date d'achèvement de la recherche 20-01-1984 | Examinateur BOUTRUCHE J.P.E. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82